# EUROPÄISCHE PATENTANMELDUNG

(11) **EP 1 211 490 A2**
(43) Veröffentlichungstag der Anmeldung: **05.06.2002**
(21) Anmeldenummer: 01125592.4
(22) Anmeldetag: 26.10.2001
(51) Int. Cl.: G01F 23/284

(54) **Füllstandsmessradargerät**

(30) Priorität: 01.12.2000 DE 10060068
(71) Anmelder: KROHNE MESSTECHNIK GMBH & CO. KG, 47058 Duisburg (DE)
(72) Erfinder: Lübbers, Wilhelm, 26904 Börger (DE)
(74) Vertreter: Gesthuysen, von Rohr & Eggert

(57) **Zusammenfassung**

Dargestellt und beschrieben ist ein Füllstandsmeßgerät, das nach dem Radarprinzip arbeitet, vorzugsweise zur Messung des Füllstands eines Mediums in einem Behälter, mit einem ein Mikrowellensignal erzeugenden Mikrowellengenerator, mit einem das Mikrowellensignal führenden Hohlleiter, mit einem als Sende- und/oder Empfangsantenne wirkenden Hornstrahler und mit einem Anschlußflansch, wobei der Hornstrahler auf der dem Medium zugewandten Seite des Anschlußflansches angeordnet ist.

Erfindungsgemäß ist vorgesehen, daß zur räumlichen Trennung und mikrowellenmäßigen Verbindung des Hohlleiters mit dem Hornstrahler eine Durchlaßscheibe vorgesehen und die Durchlaßscheibe in den Hornstrahler druckdicht eingesetzt ist. Damit wird erreicht, daß die räumliche Trennung und mikrowellenmäßige Verbindung des Hohlleiters mit dem Hornstrahler auf einfache Weise mittels einer Durchlaßscheibe durchführbar ist, ohne daß dafür die Anbringung eines eigenen Mikrowellenfensters erforderlich ist.

## Beschreibung

Die Erfindung betrifft ein Füllstandsmeßgerät, das nach dem Radarprinzip arbeitet, vorzugsweise zur Messung des Füllstands eines Mediums in einem Behälter, mit einem ein Mikrowellensignal erzeugenden Mikrowellengenerator, mit einem das Mikrowellensignal führenden Hohlleiter, mit einem als Sende- und/oder Empfangsantenne wirkenden Hornstrahler und mit einem Anschlußflansch, wobei der Hornstrahler auf der dem Medium zugewandten Seite des Anschlußflansches vorgesehen ist. Ein solches Füllstandsmeßgerät ist aus der deutschen Gebrauchsmusterschrift 94 12 243 bekannt.

Allgemein sind neben den bekannten mechanischen Füllstandsmeßgeräten, die nach dem Schwimmer- oder Tastplatten-Prinzip arbeiten, seit geraumer Zeit Füllstandsmeßgeräte bekannt, die darauf beruhen, daß ein Schwingungswellengenerator Schwingungswellen aussendet, ein Schwingungswellendetektor die an der Oberfläche eines in einem Behälter befindlichen Mediums reflektierten Schwingungswellen detektiert und aus der für die Schwingungswellen ermittelten Laufzeit die Füllstandshöhe des Mediums in dem Behälter berechnet wird. Dazu wird verwiesen auf die deutschen Offenlegungsschriften 42 33 324, 43 27 333 und 44 19 462.

Füllstandsmeßgeräte der eingangs beschriebenen Art werden im allgemeinen als berührungslose Füllstandsmeßgeräte bezeichnet, da weder die Schwingungswellengeneratoren, noch die Schwingungswellendedektoren, noch die Sendeantenne oder die Empfangsantenne mit dem Medium in Berührung stehen müssen. Zumindest stehen die Sendeantenne und die Empfangsantenne wenigstens dann nicht mit dem im Behälter befindlichen Medium in Berührung, wenn der Behälter nicht überbefüllt ist.

Sämtliche bekannten, in der Regel berührungslos arbeitenden Füllstandsmeßgeräte arbeiten mit von ihnen ausgesandten Schwingungswellen, die von der Oberfläche des Mediums, dessen Füllstand zu messen ist, reflektiert werden. Bei den bekannten Verfahren zur Bestimmung des Füllstands unterscheidet man zwischen einerseits solchen, die die Phasenverschiebung zwischen den ausgesandten und den detektierten Schwingungswellen messen, und andererseits solchen, die unmittelbar die Laufzeit der Schwingungswellen messen. Bei der Laufzeitmessung unterscheidet man ferner im wesentlichen wiederum einerseits solche Füllstandsmeßgeräte, die die Laufzeit anhand von Schwingungswellen mit impulsmodulierten Amplituden messen, und andererseits solche, die die Laufzeit anhand von frequenzmodulierten Schwingungswellen messen. Letztere bezeichnet man auch als Füllstandsmeßgeräte, die nach dem FMCW-Verfahren arbeiten.

Die hier in Rede stehenden berührungslos arbeitenden Füllstandsmeßgeräte, die nach dem Radarprinzip arbeiten, verwenden üblicherweise als Sendeantenne bzw. als Empfangsantenne einen Hornstrahler. Diesem wird das von einem Mikrowellengenerator erzeugte Mikrowellensignal typischerweise über einen Hohlleiter zugeführt. Zur räumlichen Trennung und mikrowellenmäßigen Verbindung des Hohlleiters mit dem Hornstrahler wird bisher im allgemeinen ein Mikrowellenfenster verwendet, wie z.B. in der deutschen Offenlegungsschrift 195 42 525 beschrieben. Ein solches Mikrowellenfenster wird mit seinem Befestigungsteil auf der dem Medium abgewandten Seite des Anschlußflansches derart befestigt, daß eine druckdichte Verbindung zwischen dem Mikrowellenfenster und dem Anschlußflansch entsteht. Auf diese Weise wird eine räumliche Trennung des Hohlleiters und des Mikrowellengenerators von dem in dem Behälter befindlichen und ggf. chemisch aggressiven und/oder korrossiven Medium erzielt. Dafür ist jedoch das Vorsehen eines zusätzlichen Bauteils, nämlich des Mikrowellenfensters, erforderlich. Erfolgt die Anbringung des Mikrowellenfensters nicht, so sind der Hohlleiter sowie der Mikrowellengenerator dem aggressiven und/oder korrossiven Medium schutzlos ausgesetzt.

Dementsprechend ist es die Aufgabe der Erfindung, ein solches Füllstandsmeßgerät, das nach dem Radarprinzip arbeitet, bereitzustellen, bei dem immer und auf einfache Weise gewährleistet ist, daß eine räumliche und druckdichte Trennung des Hohlleiters sowie des Mikrowellengenerators von dem in dem Behälter befindlichen Medium besteht.

Das erfindungsgemäße Füllstandsmeßgerät, mit dem die zuvor aufgezeigte und hergeleitete Aufgabe gelöst ist, ist ausgehend von dem eingangs beschriebenen Füllstandsmeßgerätes dadurch gekennzeichnet, daß zur räumlichen Trennung und mikrowellenmäßigen Verbindung des Hohlleiters mit dem Hornstrahler eine Durchlaßscheibe vorgesehen und die Durchlaßscheibe in den Hornstrahler druckdicht eingesetzt ist. Erfindungsgemäß wird somit kein separates Mikrowellenfenster mehr vorgesehen, sondern ein solcher Hornstrahler, der selbst schon die Durchlaßscheibe zur räumlichen Trennung und mikrowellenmäßigen Verbindung des Hohlleiters mit dem Hornstrahler aufweist. Eine versehentliche Nichtanbringung des Mikrowellenfensters kommt somit nicht mehr in Betracht.

Als mikrowellendurchlässige Durchlaßscheiben sind im wesentlichen solche Durchlaßscheiben geeignet, die aus Glas oder Keramik bestehen. Deren Form ist grundsätzlich beliebig, vorzugsweise sind die Durchlaßscheiben jedoch im wesentlichen kreisförmig, besonders bevorzugt kreisrund.

Für das druckdichte Einsetzen der Durchlaßscheibe in den Hornstrahler steht eine Vielzahl von Möglichkeiten zur Verfügung. Gemäß einer bevorzugten Weiterbildung der Erfindung ist jedoch vorgesehen, daß der Hornstrahler mit einem Dielektrikum beschichtet ist und die Durchlaßscheibe über das Dielektrikum in den Hornstrahler eingeschmolzen oder eingeklebt ist. Bei dieser bevorzugten Weiterbildung der Erfindung ist also vorgesehen, daß die Oberfläche wenigstens jenes Bereichs des Hornstrahlers mit dem Dielektrikum beschichtet ist, in dem die Durchlaßscheibe in den Hornstrahler eingesetzt ist. Die in den Hornstrahler eingesetzte Durchlaßscheibe steht somit nicht in direktem Kontakt mit dem Hornstrahler, sondern ist mit diesem mittelbar über das Dielektrikum verbunden. Diese Verbindung erfolgt dabei entweder mittels eines separaten Klebers oder aber durch ein Einschmelzen der Durchlaßscheibe in den mit einem Dielektrikum beschichteten Hornstrahler. Ein solches Einschmelzen der Durchlaßscheibe umfaßt dabei ein Anschmelzen des Dielektrikums, ein Anschmelzen der Durchlaßscheibe, aber auch ein gleichzeitiges Anschmelzen sowohl des Dielektrikums als auch der Durchlaßscheibe. Dabei wird eine solche Trennung und mikrowellenmäßige Verbindung des Hohlleiters mit dem Hornstrahler erzielt, bei der die Durchlaßscheibe praktisch spannungsfrei, also ohne kräftemäßige Beanspruchung, in dem Hornstrahler gehalten ist.

Für das zuvor beschriebene Einschmelzen oder Einkleben der Durchlaßscheibe in den Hornstrahler über das Dielektrikum ist es ausreichend, wenn der Hornstrahler in jenem Bereich mit dem Dielektrikum beschichtet ist, in dem er an die in ihn eingesetzte Durchlaßscheibe angrenzt. Gemäß einer bevorzugten Weiterbildung der Erfindung ist jedoch vorgesehen, daß die Oberfläche des Hornstrahlers vollständig mit dem Dielektrikum beschichtet ist. Auf diese Weise wird auch ein besonders guter Schutz des Hornstrahlers gegen das in dem Behälter befindliche chemisch aggressive und/oder korrossive Medium erzielt.

Bei der Beschichtung des Hornstrahlers mit dem Dielektrikum soll die Schichtdicke des Dielektrikums 2 mm nicht überschreiten, um keine derart hohen Aufladungen des Dielektrikums zu ermöglichen, die mit den vorgeschriebenen Explosionsschutzmaßnahmen nicht mehr vereinbar wären. Bevorzugte Materialien für das Dielektrikum sind Email sowie Kunststoff, wie PTFE, PFA, FEP oder PVDF.

Insbesondere bei der Verwendung von Email als Dielektrikum und insbesondere dann, wenn der Hornstrahler vollständig mit einer Email-Schicht versehen ist, ist die spannungsfreie Aufnahme der Durchlaßscheibe in dem Hornstrahler besonders vorteilhaft, da somit kein Abplatzen der Email-Schicht von dem Hornstrahler zu befürchten ist. Aufgrund des Einklebens oder des Einschmelzens der Durchlaßscheibe in den Hornstrahler liegt ja kein Spann- oder Preßsitz der Durchlaßscheibe in dem Hornstrahler vor. Bei der Verwendung einer Durchlaßscheibe aus Glas bedeutet dies, daß der mit dem Email beschichtete Hornstrahler zum Einsetzen der Durchlaßscheibe so stark erwärmt wird, daß das Email angeschmolzen wird und die gläserne Durchlaßscheibe in das angeschmolzene Email eingefügt werden kann. Nach dem Abkühlen der Email-Schicht wird auf diese Weise eine mechanisch feste und druckdichte Verbindung erzielt.

Gemäß einer bevorzugten Weiterbildung der Erfindung kann die räumliche Trennung und mikrowellenmäßige Verbindung im Hinblick auf ihre Durchlässigkeit für Mikrowellenstrahlung dadurch verbessert sein, daß die Dicke der Durchlaßscheibe ein ganzzahliges Vielfaches der Wellenlänge der Mikrowellen beträgt. Bei einer solchen Anpassung der Dicke der Durchlaßscheibe müssen natürlich die Dielektrizitätszahl des Materials der Durchlaßscheibe und die Ausbreitungsgeschwindigkeit der Mikrowellenstrahlung innerhalb des Hohlleiters bzw. des Hornstrahlers berücksichtigt werden.

Die Erfindung kann ferner dahingehend weitergebildet sein, daß die Durchlässigkeit der räumlichen Trennung und mikrowellenmäßigen Verbindung des Hohlleiters mit dem Hornstrahler für Mikrowellenstrahlung dadurch verbessert ist, daß zur Anpassung des Wellenwiderstandes der Durchlaßscheibe an den Wellenwiderstand des Hohlleiters bzw. des Hornstrahler wenigsten ein einstückig angeformter Anpassungskörper an der Durchlaßscheibe vorgesehen ist. Durch die einstückige Ausführung der Durchlaßscheibe mit dem Anpassungskörper entfallen Übergänge zwischen der Durchlaßscheibe und dem Anpassungskörper, so daß einerseits mit solchen Übergängen verbundene Reflexionen der Mikrowellenstrahlung im Bereich der Durchlaßscheibe vermieden werden und andererseits zwischen der Durchlaßscheibe und dem Anpassungskörper keine Zwischenbereiche vorhanden sind, in die ein aggressives und/oder korrossives Medium eindringen kann.

Wird das erfindungsgemäße Füllstandsmeßgerät in solchen Situationen eingesetzt, in denen besonders hohe Druckunterschiede zwischen dem Inneren des Behälters einerseits und der Umgebung des Behälters andererseits vorliegen, wird also die Durchlaßscheibe von einer Seite her mit einem deutlichen Über-bzw. Unterdruck beaufschlagt, so ist gemäß einer bevorzugten Weiterbildung der Erfindung vorgesehen, daß die Durchlaßscheibe in dem Hornstrahler wenigstens in einer Richtung einer Normalen der Durchlaßscheibe mittels Formschluß gehalten ist. Daß die Durchlaßscheibe in dem Hornstrahler wenigsten in einer Richtung einer Normalen der Durchlaßscheibe mittels Formschluß gehalten ist, bedeutet im Zusammenhang mit der vorliegenden Erfindung, daß für die Durchlaßscheibe neben dem druckdichten Einsetzen in den Hornstrahler durch Einschmelzen oder Einkleben eine weitere Maßnahme vorgesehen ist, um ein Herausspringen der Durchlaßscheibe aus dem Hornstrahler aufgrund des vorherrschenden hohen Druckunterschieds zu vermeiden. Gemäß der in Rede stehenden bevorzugten Weiterbildung der Erfindung ist nämlich vorgesehen, daß eine entsprechende Bewegung der Durchlaßscheibe längs des Druckradienten durch eine formschlüssige Halterung der Durchlaßscheibe in dem Hornstrahler vermieden wird.

Konkret ist z.B. eine solche Weiterbildung des erfindungsgemäßen Füllstandsmeßgeräts möglich, bei der die Durchlaßscheibe kreisförmig ist und auf der Seite, auf der sie durch Formschluß in dem Hornstrahler gehalten ist, einen geringeren Durchmesser aufweist als auf der gegenüberliegenden Seite. Die Beaufschlagung mit dem höheren Druck erfolgt dann auf der Seite, auf der die Durchlaßscheibe den größeren Durchmesser aufweist. Insbesondere ist also eine solche Weiterbildung denkbar, bei der die Durchlaßscheibe eine konische Form oder aber einen stufenförmigen Rand aufweist. Dabei ist selbstverständlich der für die Aufnahme der Durchlaßscheibe vorgesehene Bereich des Hornstrahlers, der ggf. mit einem Dielektrikum beschichtet ist, an die Form der Durchlaßscheibe angepaßt.

Im einzelnen gibt es nun eine Vielzahl von Möglichkeiten, das erfindungsgemäße Füllstandsmeßgerät auszugestalten und weiterzubilden. Dazu wird auf die dem Patentanspruch 1 nachgeordneten Patentansprüche sowie auf die nachfolgende detailierte Beschreibung bevorzugter Ausführungsbeispiele der Erfindung unter Bezugnahme auf die Zeichnung verwiesen. In der Zeichnung zeigt
- Fig. 1: eine Antenneneinrichtung eines Füllstandsmeßgeräts gemäß einem ersten bevorzugten Ausführungsbeispiel der Erfindung in einer Explosionsdarstellung im Schnitt,
- Fig. 2: die Antenneneinrichtung des Füllstandsmeßgeräts gemäß dem ersten bevorzugten Ausführungsbeispiel der Erfindung in zusammengebauten Zustand im Schnitt,
- Fig. 3: eine Antenneneinrichtung eines Füllstandsmeßgeräts gemäß einem zweiten bevorzugten Ausführungsbeispiel der Erfindung im Schnitt und

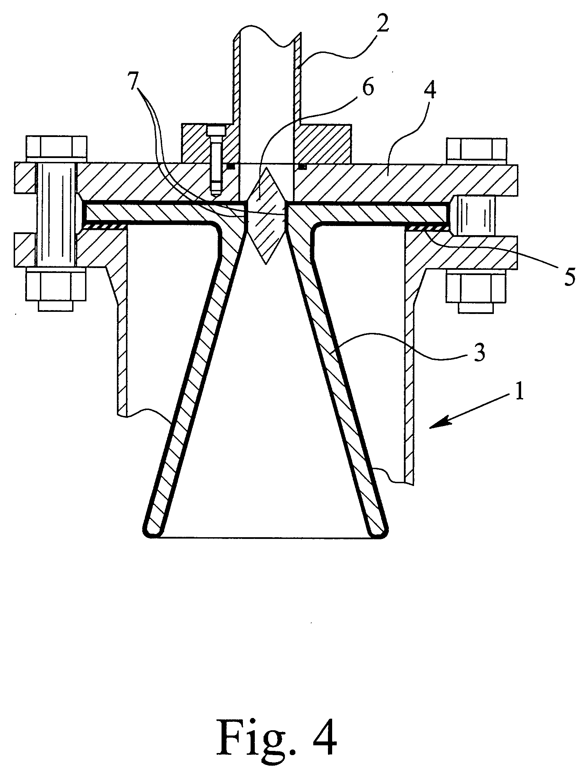

- Fig. 4: eine Antenneneinrichtung eines Füllstandsmeßgeräts gemäß einem dritten bevorzugten Ausführungsbeispiel der Erfindung im Schnitt.

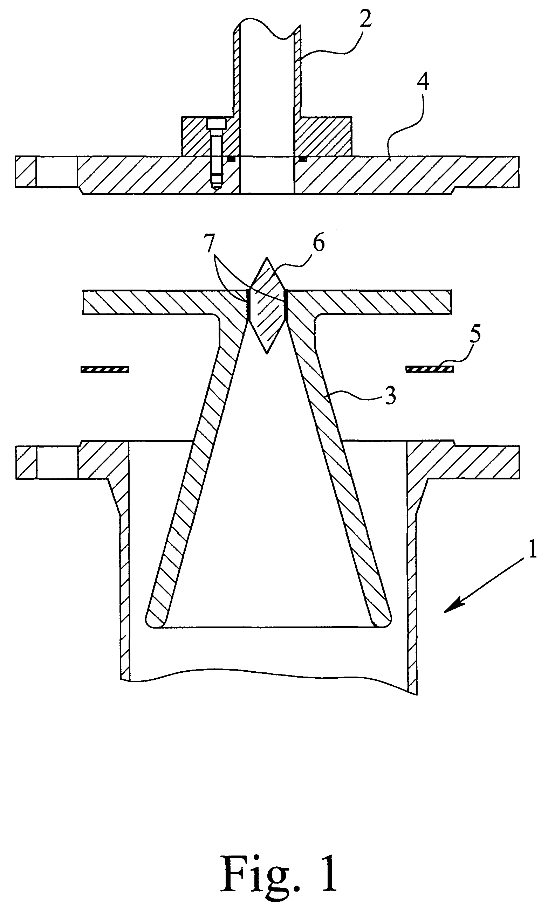

Aus Fig. 1 ist der Teil eines Füllstandsmeßgerätes gemäß einem ersten bevorzugten Ausführungsbeispiel der Erfindung ersichtlich, der für die Erfindung wesentlich ist, nämlich die an einen Behälter zu montierende Antenneneinrichtung des Füllstandsmeßgerätes. Nicht dargestellt ist in Fig. 1 sowie in den anderen Figuren also ein Mikrowellensignal erzeugender Mikrowellengenerator des Füllstandsmeßgeräts sowie ein reflektierte Mikrowellensignale empfangender Meßumformer.

Wie in den Figuren dargestellt, weist das erfindungsgemäße Füllstandsmeßgerät einen Hohlleiter 2 auf, in den das von dem Mikrowellengenerator erzeugte Mikrowellensignal eingekoppelt wird und in dem das Mikrowellensignal dann weitergeführt wird. Das Füllstandsmeßgerät weist ferner einen Hornstrahler 3 auf, der aus Edelstahl gefertigt ist und der gemäß der dargestellten bevorzugten Ausführungsbeispiele der Erfindung gleichzeitig als Sende- und Empfangsantenne eingesetzt wird. Ferner sind ein Anschlußflansch 4 und eine Dichtung 5 vorgesehen, wobei die Dichtung 5 eine Abdichtung zwischen dem Hornstrahler 3 und dem Behälter 1 bewirkt. Durch den Hohlleiter 2 hindurch wird einerseits das von dem Mikrowellengenerator erzeugte Mikrowellensignal zum Anschlußflansch 5 hin geführt und andererseits, da der Hornstrahler 3 auch als Empfangsantenne wirkt, das am Medium reflektierte und von dem Hornstrahler 3 empfangene Mikrowellensignal zum ebenfalls nicht dargestellten Meßumformer hin zurückgeführt. Dabei ist der vom Mikrowellengenerator und vom Meßumformer herkommende Hohlleiter 2 auf der dem Medium abgewandten Seite des Anschlußflansches 5 angeordnet.

Wie aus der Fig. 1 ersichtlich, ist zur räumlichen Trennung und mikrowellenmäßigen Verbindung des Hohlleiters 2 mit dem Hornstrahler 3 eine Durchlaßscheibe 6 vorgesehen, die in den Hornstrahler 3 druckdicht eingesetzt ist. Gemäß dem aus Fig. 1 ersichtlichen ersten bevorzugten Ausführungsbeispiel der Erfindung ist die Durchlaßscheibe 6 in den Hornstrahler 3 eingeschmolzen. Dazu ist die Oberfläche des der Durchlaßscheibe 6 in ihrem eingebauten Zustand zugewandten Bereichs des Hornstrahlers 3 mit einem Dielektrikum 7, vorliegend einer Email-Schicht, beschichtet.

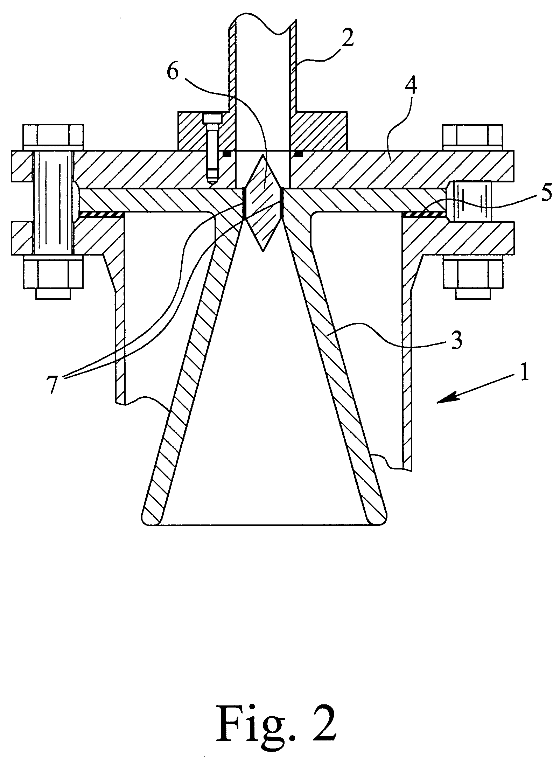

Wie nochmals aus Fig. 2 ersichtlich, die die Antenneneinrichtung des Füllstandsmeßgeräts gemäß dem ersten bevorzugten Ausführungsbeispiel der Erfindung in zusammengebauten Zustand zeigt, erfolgt die Abdichtung des Innenraums des Behälters 1 von dessen Umgebung durch die mit dem Behälter 1 und dem Hornstrahler 3 zusammenwirkende Dichtung 5 sowie dadurch, daß die Durchlaßscheibe 6 über das Dielektrikum 7 druckdicht in den Hornstrahler 3 eingesetzt ist. Außerdem weist die Durchlaßscheibe 6 sowohl auf ihrer dem in dem Behälter 1 befindlichen Medium zugewandten Seite als auch auf ihrer dem Medium abgewandten Seite jeweils einen einstückig angeformten Anpassungskörper auf, der dazu dient, den Wellenwiderstand der Durchlaßscheibe 6 an den Wellenwiderstand des Hohlleiters 2 bzw. des Hornstrahlers 3 anzupassen. Vorliegend sind solche Anpassungskörper gewählt worden, die im wesentlichen kegelförmig ausgebildet sind. Durch die einstückige Ausbildung der Durchlaßscheibe 6 mit den beiden Anpassungskörpern existieren zwischen der Durchlaßscheibe 6 und den Anpassungskörpern keine Grenzflächen, in die ansonsten ein chemisch aggressives und/oder korrossives Medium eindringen könnte.

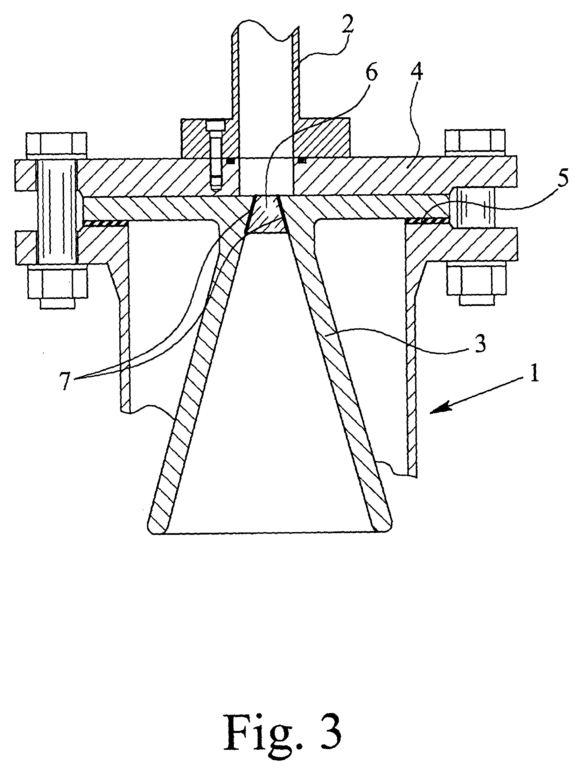

Liegt nun im Inneren des Behälters 1 ein wesentlich höherer Druck als in dessen Umgebung vor, so ist, wie aus Fig. 3 ersichtlich, gemäß einem zweiten bevorzugten Ausführungsbeispiel der Erfindung eine solche Durchlaßscheibe 6 vorgesehen, die in der Richtung einer Normalen der Durchlaßscheibe 6 mittels Formschluß in dem Hornstrahler 3 gehalten ist. Konkret ist die Form der Durchlaßscheibe 6 gemäß dem zweiten bevorzugten Ausführungsbeispiel der Erfindung nämlich kegelabschnittförmig, also konisch. Dabei ist der Hornstrahler 3 in dem Bereich, in dem die konische Durchlaßscheibe 6 in den Hornstrahler 3 eingesetzt ist, von seiner Form her an die Durchlaßscheibe 6 angepaßt. Durch die konische Form der Durchlaßscheibe 6 derart, daß sich ihr größerer Durchmesser auf der dem Medium zugewandten Seite befindet und ihre Seite mit dem kleineren Durchmesser zum Anschlußflansch 4 hin weist, kann die Durchlaßscheibe 6 selbst bei einem sehr hohen Druck in dem Behälter 1 nicht aus dem Hornstrahler 3 herausgedrückt werden. Im Gegenteil kommt es mit zunehmendem Druckunterschied zwischen dem Inneren des Behälters 1 und dessen Umgebung zu einer zunehmenden Abdichtung durch den sich verstärkenden Preßsitz der Durchlaßscheibe 6 in dem Hornstrahler 3.

Während bei den Antenneneinrichtungen gemäß dem ersten bevorzugten Ausführungsbeispiel der Erfindung bzw. dem zweiten bevorzugten Ausführungsbeispiel der Erfindung der Hornstrahler 3 nur in jenem Bereich mit einem Dielektrikum 7 beschichtet ist, in dem die Durchlaßscheibe 6 angeordnet ist, ist gemäß einem dritten bevorzugten Ausführungsbeispiel der Erfindung vorgesehen, daß der Hornstrahler 3 auf seiner gesamten Oberfläche mit einem Dielektrikum 7 beschichtet ist. Dadurch wird der gesamte Hornstrahler 3 vor der Einwirkung eines chemisch aggressiven und/oder korrossiven Mediums geschützt. Bei dem Dielektrikum 7 handelt es sich vorliegend ebenfalls um eine Email-Schicht. Deren Dicke beträgt maximal 2 mm, damit auf der Oberfläche des Hornstrahlers 3 nicht derart hohe Aufladungen auftreten können, die aufgrund von Explosionsschutzbestimmungen nicht mehr zulässig wären.

## Patentansprüche

1. Füllstandsmeßgerät, das nach dem Radarprinzip arbeitet, vorzugsweise zur Messung des Füllstandes eines Mediums in einem Behälter (1), mit einem ein Mikrowellensignal erzeugenden Mikrowellengenerator, mit einem das Mikrowellensignal führenden Hohlleiter (2), mit einem als Sende- und/oder Empfangsantenne wirkenden Hornstrahler (3) und mit einem Anschlußflansch (4), wobei der Hornstrahler (3) auf der dem Medium zugewandten Seite des Anschlußflansches (4) vorgesehen ist,
**dadurch gekennzeichnet,**
**daß** zur räumlichen Trennung und mikrowellenmäßigen Verbindung des Hohlleiters (2) mit dem Hornstrahler (3) eine Durchlaßscheibe (6) vorgesehen und die Durchlaßscheibe (6) in den Hornstrahler (3) druckdicht eingesetzt ist.

2. Füllstandsmeßgerät nach Anspruch 1, **dadurch gekennzeichnet, daß** der Hornstrahler (3) mit einem Dielektrikum (7) beschichtet ist und die Durchlaßscheibe (6) über das Dielektrikum (7) in den Hornstrahler (3) eingeschmolzen oder eingeklebt ist.

3. Füllstandsmeßgerät nach Anspruch 2, **dadurch gekennzeichnet, daß** die Oberfläche des Hornstrahlers (3) vollständig mit dem Dielektrikum (7) beschichtet ist.

4. Füllstandsmeßgerät nach Anspruch 2 oder 3, **dadurch gekennzeichnet, daß** die Schichtdicke des Dielektrikums (7) maximal 2 mm beträgt.

5. Füllstandsmeßgerät nach einem der Ansprüche 2 bis 4, **dadurch gekennzeichnet, daß** das Dielektrikum (7) aus Email besteht.

6. Füllstandsmeßgerät nach einem der Ansprüche 2 bis 4, **dadurch gekennzeichnet, daß** das Dielektrikum (7) aus Kunststoff- vorzugsweise aus PTFE, PFA, FEP oder PVDF - besteht.

7. Füllstandsmeßgerät nach einem der Ansprüche 1 bis 6, **dadurch gekennzeichnet, daß** die Dicke der Durchlaßscheibe (6) ein ganzzahliges Vielfaches der Wellenlänge der Mikrowellen beträgt.

8. Füllstandsmeßgerät nach einem der Ansprüche 1 bis 7, **dadurch gekennzeichnet, daß** die Durchlaßscheibe (6) zur Anpassung des Wellenwiderstandes der Durchlaßscheibe (6) an den Wellenwiderstand des Hohlleiters (2) bzw. des Hornstrahlers (3) wenigstens einen einstückig angeformten Anpassungskörper aufweist.

9. Füllstandsmeßgerät nach einem der Ansprüche 1 bis 8, **dadurch gekennzeichnet, daß** die Durchlaßscheibe (6) in dem Hornstrahler (3) wenigstens in einer Richtung einer Normalen der Durchlaßscheibe (6) mittels Formschluß gehalten ist.

10. Füllstandsmeßgerät nach Anspruch 9, **dadurch gekennzeichnet, daß** die Durchlaßscheibe (6) kreisförmig ist und auf der Seite, auf der sie durch Formschluß gehalten ist, einen geringeren Durchmesser aufweist als auf der gegenüberliegenden Seite.

11. Füllstandsmeßgerät nach Anspruch 9 oder 10, **dadurch gekennzeichnet, daß** die Durchlaßscheibe (6) eine konische Form aufweist.

12. Füllstandsmeßgerät nach Anspruch 9 oder 10, **dadurch gekennzeichnet, daß** die Durchlaßscheibe (6) einen stufenförmigen Rand aufweist.
